# EUROPÄISCHE PATENTSCHRIFT

(11) **EP 2 743 543 B1**
(45) Veröffentlichungstag und Bekanntmachung des Hinweises auf die Patenterteilung: **09.03.2016**
(21) Anmeldenummer: 13195221.0
(22) Anmeldetag: 02.12.2013
(51) Int. Cl.: F16H 47/04, F16H 3/72

(54) **Leistungsverzweigungsgetriebe eines Fahrantrieb eines Fahrzeugs**
Power split transmission of a drive assembly of a vehicle
Engrenage d'embrayage à division de puissance d'un entraînement de véhicule

(30) Priorität: 17.12.2012 DE 102012112380; 23.09.2013 DE 102013110463
(43) Veröffentlichungstag der Anmeldung: 18.06.2014
(73) Patentinhaber: Linde Hydraulics GmbH & Co. KG, 63743 Aschaffenburg (DE)
(72) Erfinder: Krittian, Lukas, 63739 Aschaffenburg (DE); Langen, Alfred, Dr., 63762 Großostheim (DE); Bergmann, Martin, 64850 Schaafheim (DE)
(74) Vertreter: Geirhos, Johann

(56) Entgegenhaltungen:
- EP-A2- 1 855 029
- WO-A1-2007/104539
- DE-A1- 10 248 400
- DE-A1- 19 841 829
- DE-A1- 19 843 069
- FR-A- 1 231 667
- US-A- 3 748 924
- US-A- 4 259 881
- US-A1- 2004 124 021

## Beschreibung

Die Erfindung betrifft ein Leistungsverzweigungsgetriebe eines Fahrantriebs eines Fahrzeugs, das ein stufenloses Getriebe und ein Summierungsgetriebe umfasst, wobei das stufenlose Getriebe als hydrostatisches Getriebe ausgebildet ist und eine Primäreinheit und eine von der Primäreinheit in beide Drehrichtungen antreibbare Sekundäreinheit umfasst, wobei die Primäreinheit des stufenlosen Getriebes von einem Antriebsmotor, insbesondere einem Verbrennungsmotor, des Fahrzeugs angetrieben ist und einen Durchtrieb zum Antrieb eines ersten Antriebselements eines als Planetengetriebes ausgebildeten Summierungsgetriebes aufweist, die Sekundäreinheit des stufenlosen Getriebes zum Antrieb mit einem zweiten Antriebselement des als Planetengetriebes ausgebildeten Summierungsgetriebes in trieblicher Verbindung steht und ein Abtriebselement des als Planetengetriebe ausgebildeten Summierungsgetriebes mit einem Radantrieb trieblich in Verbindung steht.

Aus der gattungsgemäßen FR 1 231 667 A ist ein Leistungsverzweigungsgetriebe bekannt, bei dem eine einseitig verstellbare Verstellpumpe eines hydrostatischen Getriebes einen Durchtrieb zum Antrieb eines Sonnenrades eines als Planetengetriebe ausgebildeten Summierungsgetriebes aufweist.

Die US 4 259 881 A und die WO 2007/104539 A1 offenbaren jeweils ein Leistungsverzweigungsgetriebe, bei dem das Sonnenrad des als Platengetriebe ausgebildeten Summierungsgetriebes über eine Antriebswelle von dem Antriebsmotor angetrieben ist. Die als Verstellpumpe ausgebildete Primäreinheit des hydrostatsichen Getriebes weist zum Antrieb eine parallel zur Antriebswelle angeordnete Triebwelle auf.

Aus der EP 1 855 029 A1 ist ein Leistungsverzweigungsgetriebe bekannt, bei dem eine Verstellpumpe eines hydrostatischen Getriebes einen Durchtrieb zum Antrieb eines Sonnenrades eines als Planetengetriebe ausgebildeten Summierungsgetriebes aufweist. Das Leistungsverzweigungsgetriebe weist zwei mechanische Vorwärtsgänge und einen mechanischen Rückwärtsgang auf, die über Kupplungseinrichtungen geschaltet werden. Der Rückwärtsgang ist von einem Zahnrad gebildet, mit dem eine Drehrichtungsumkehr an der Abtriebswelle erzielt wird.

Um die stetig strengeren Abgasnormen bei Fahrzeugen einhalten und erfüllen zu können, werden zunehmend Fahrantriebe mit Leistungsverzweigungsgetrieben eingesetzt, die eine stufenlose Übersetzung ermöglichen. Derartige Leistungsverzeigungsgetriebe mit einer stufenlosen Übersetzung ermöglichen es, für alle Betriebsbereiche des Fahrzeugs einen optimalen Wirkungsgrad darzustellen, so dass ein verbrauchsgünstiger Betrieb eines als Verbrennungsmotor ausgebildeten Antriebsmotors des Fahrzeugs erzielt werden kann.

Ein Fahrantrieb mit einem gattungsgemäßen Leistungsverzweigungsgetriebe ist aus der EP 2 034 221 A2 bekannt. Bekannte Leistungsverzweigungsgetriebe sind mit schaltbaren Kupplungseinrichtungen versehen, beispielsweise nasslaufenden Lamellenkupplungen oder Reibungskupplungen, die im Betrieb des Leistungsverzweigungsgetriebes permanent mitrotieren. Die mitrotierenden Kupplungseinrichtungen führen hierbei aufgrund der Planschverluste zu zusätzlichen Verlusten, die den Wirkungsgrad des Fahrantriebs entsprechend verringern. Zudem verursachen die vorhandenen Kupplungseinrichtungen des Leistungsverzweigungsgetriebes durch eine erhöhte Anzahl an Bauteilen zusätzlichen Bauraum und Herstellungsaufwand und erhöhen das Gewicht des Leistungsverzweigungsgetriebes.

Der vorliegenden Erfindung liegt die Aufgabe zugrunde, ein Leistungsverzweigungsgetriebe der eingangs genannten Gattung zur Verfügung zu stellen, das hinsichtlich des Bauraums, des Gewichts sowie des Wirkungsgrades verbessert ist.

Diese Aufgabe wird erfindungsgemäß dadurch gelöst, dass die Primäreinheit als in dem Fördervolumen beidseitig verstellbare Verstellpumpe und die Sekundäreinheit als im geschlossenen Kreislauf angeschlossener hydraulischer Motor ausgebildet ist und dass die Primäreinheit des stufenlosen Getriebes eine Triebwelle aufweist, die eingangsseitig von dem Antriebsmotor angetrieben ist und ausgangsseitig direkt und ohne zwischengeschaltete Kupplungseinrichtung mit dem Sonnenrad des Summierungsgetriebes zu dessen Antrieb trieblich verbunden ist, und die Sekundäreinheit des stufenlosen Getriebes eine Triebwelle aufweist, die ohne zwischengeschaltete Kupplungseinrichtung mit einem Hohlrad oder einem Planetenträger des Summierungsgetriebes in trieblicher Verbindung steht und der Planetenträger oder das Hohlrad des Summierungsgetriebes ein Abtriebselement des Summierungsgetriebes bilden, das mit dem Radantrieb trieblich verbunden ist.

Das erfindungsgemäße Leistungsverzweigungsgetriebe weist somit ein Summierungsgetriebe ohne schaltbare Kupplungseinrichtungen auf. Der Antrieb des Sonnenrades des als Planetengetriebes ausgebildete Summierungsgetriebes durch den Antriebsmotor über die Primäreinheit als mechanischen Zweig des Leistungsverzweigungsgetriebes ermöglicht es, durch eine Überlagerung einer Drehzahl an dem zweiten Antriebselement über das stufenlose Getriebe den gesamten Geschwindigkeitsbereich für eine Rückwärtsfahrt und Vorwärtsfahrt des Fahrzeugs ohne Kupplungseinrichtungen in dem Summierungsgetriebe abzubilden. Der Entfall von Kupplungseinrichtungen führt bei dem erfindungsgemäßen Leistungsverzweigungsgetriebe zu einem geringen Bauaufwand und Bauraumbedarf sowie einem geringen Gewicht des Leistungsverzweigungsgetriebes. Zudem weist das erfindungsgemäße Leistungsverzweigungsgetriebe geringe Planschverluste auf, wodurch das erfindungsgemäße Leistungsverzweigungsgetriebe einen hohen Wirkungsgrad aufweist.

Die Verstellpumpe ist als beidseitig verstellbare Verstellpumpe ausgebildet. Hierdurch wird es ermöglicht, den im geschlossenen Kreislauf an die Verstellpumpe angeschlossenen hydraulischen Motor in beide Drehrichtungen zu betreiben, so dass über den hydrostatischen Zweig des Leistungsverzweigungsgetriebes und die Drehzahl sowie die beiden Drehrichtungen des von dem hydraulischen Motor angetriebenen Antriebselements des Planetengetriebes der gesamten Geschwindigkeitsbereich für eine Rückwärtsfahrt und Vorwärtsfahrt des Fahrzeugs abgebildet werden kann.

Gemäß einer bevorzugten Ausführungsform der Erfindung ist die Triebwelle der Primäreinheit eingangsseitig direkt oder unter Zwischenschaltung einer Stirnradgetriebestufe mit einer Abtriebswelle des Antriebsmotors verbunden. Bei einem direkten Antrieb der Primäreinheit durch die Abtriebswelle des Antriebsmotors kann ein koaxialer Aufbau des Antriebsmotors und des Leistungsverzweigungsgetriebes erzielt werden, der für den von dem Antriebsmotors und dem Leistungsverzweigungsgetriebe gebildeten Antriebsstrang einen Aufbau mit geringen Abmessungen in radialer Richtung ermöglicht. Bei einem Antrieb der Primäreinheit über eine Stirnradgetriebestufe wird ermöglicht, das Leistungsverzweigungsgetriebe achsparallel zu dem Antriebsmotor innerhalb dessen Axialerstreckung anzuordnen, so dass für den von dem Antriebsmotors und dem Leistungsverzweigungsgetriebe gebildeten Antriebsstrang ein Aufbau mit geringen Abmessungen in axialer Richtung ermöglicht wird.

Hinsichtlich eines geringen Bauraumbedarf und eines günstigen Bauaufwandes ergeben sich Vorteile, wenn die Sekundäreinheit und das Summierungsgetriebe gemäß einer Ausführungsform der Erfindung koaxial zu der Primäreinheit angeordnet sind, wobei die Sekundäreinheit zwischen der Primäreinheit und dem Summierungsgetriebe angeordnet ist. Diese koaxiale Anordnung der Sekundäreinheit direkt hinter der Primäreinheit ermöglicht es, die Primäreinheit und die Sekundäreinheit des stufenlosen Getriebes als Kompaktgetriebe auszuführen. Das Summierungsgetriebe ist direkt hinter der Sekundäreinheit angeordnet. Zudem kann mit einer derartigen koaxialen Anordnung der Primäreinheit, der Sekundäreinheit und des Summierungsgetriebes ein geringer Bauraum des Leistungsverzweigungsgetriebes in radialer Richtung erzielt werden.

Bei einer derartigen koaxialen Anordnung der Sekundäreinheit zwischen der Primäreinheit und dem Summierungsgetriebe ist mit besonderem Vorteil die Triebwelle der Sekundäreinheit als Hohlwelle ausgebildet, durch die sich die Triebwelle der Primäreinheit erstreckt. Die mit dem Sonnenrad des Summierungsgetriebes verbundene Triebwelle der Primäreinheit kann auf einfache Weise durch die Hohlwelle der Sekundäreinheit zu dem hinter der Sekundäreinheit angeordneten Summierungsgetriebe hindurchgeführt werden. Die Triebwelle der Primäreinheit kann hierdurch bei dem erfindungsgemäßen Leistungsverzweigungsgetriebe als Vollwelle ausgebildet werden, die es ermöglicht, über den mechanischen Zweig von dem Antriebsmotor auf das Sonnenrad ein hohes Drehmoment zu übertragen.

Die Triebwelle der Sekundäreinheit steht gemäß einer bevorzugten Ausführungsform der Erfindung direkt mit dem Hohlrad oder dem Planetenträger des Summierungsgetriebes in trieblicher Verbindung.

Gemäß einer alternativen Ausführungsform der Erfindung ist das Summierungsgetriebe koaxial zu der Primäreinheit angeordnet und ist die Sekundäreinheit achsparallel zu der Primäreinheit angeordnet. Bei einer achsparallelen Anordnung der Sekundäreinheit zu der Primäreinheit und dem Summierungsgetriebe kann eine Bauweise des Leistungsverzweigungsgetriebes mit einer kurzen axialen Baulänge erzielt werden, da die Primäreinheit und die achsparallel versetzte Sekundäreinheit in axialer Richtung überlagernd angeordnet werden können.

Mit besonderem Vorteil steht bei einer derartigen Anordnung der Sekundäreinheit die Triebwelle der Sekundäreinheit unter Zwischenschaltung einer Stirnradgetriebestufe mit dem Hohlrad oder dem Planetenträger des Summierungsgetriebes in trieblicher Verbindung. Über die Übersetzung der Stirnradgetriebestufe besteht zusätzlich die Möglichkeit die Spreizung des Leistungsverzweigungsgetriebes zu verändern bzw. das Verhältnis der in dem mechanischen Zweig oder dem Zweig über das stufenlose Getriebe übertragenen Leistungsanteile zu beeinflussen.

Der Radantrieb kann gemäß einer Ausgestaltungsform der Erfindung als Antriebsachse eines mehrspurigen Fahrzeugs ausgebildet sein, wobei das Abtriebselement des Summierungsgetriebes mit einem Differentialgetriebe der Antriebsachse trieblich verbunden ist.

Besondere Vorteile ergeben sich, wenn gemäß einer alternativen Ausgestaltungsform der Erfindung der Radantrieb als Einzelradantrieb eines einspurigen Kraftrades ausgebildet ist, wobei das Abtriebselement des Summierungsgetriebes mit einem Kegelrad eines das Einzelrad antreibenden Kegelradgetriebes oder einem Kettenrad eines das Einzelrad antreibenden Kettengetriebes trieblich verbunden ist. Das erfindungsgemäße Leistungsverzweigungsgetriebe ermöglicht aufgrund des geringen Bauraumbedarfs und geringen Gewichts bei einem Kraftrad einen günstigen Einbau. Der hydraulische Motor kann als im Schluckvolumen fester Konstantmotor ausgebildet sein.

Alternativ kann der hydraulische Motor als im Schluckvolumen verstellbarer Verstellmotor ausgebildet sein. Hierdurch wird es auf einfache Weise ermöglicht, den Drehzahlbereich des von dem hydraulischen Motor angetriebenen Antriebselements des Summierungsgetriebes nach oben hinsichtlich höherer Fahrgeschwindigkeiten des Fahrzeugs zu verschieben.

Sofern die Verstellpumpe und der hydraulische Motor bei einer koaxialen Anordnung als Kompaktgetriebe in einer koaxialen Back-to-Back-Bauweise ausgeführt sind, ergeben sich weiter Vorteile hinsichtlich des Bauaufwandes und des Bauraumbedarfs. Bei einer Back-to-Back-Bauweise der Verstellpumpe und des hydraulischen Motors kann eine gemeinsame Steuerbodenaufnahme für die Verstellpumpe und den hydraulischen Motor verwendet werden, in dem die Druckmittelleitungen zwischen der Verstellpumpe und dem hydraulischen Motor ausgeführt sind.

Die Erfindung betrifft weiterhin Verfahren zum Betrieb eines erfindungsgemäßen Leistungsverzweigungsgetriebes eines Fahrantriebs eines Fahrzeugs, bei dem die als beidseitig verstellbare Verstellpumpe ausgebildete Primäreinheit des stufenlosen hydrostatischen Getriebes das Sonnenrad des als Planetengetriebes ausgebildeten Summierungsgetriebes antreibt und die von dem hydraulischen Motor gebildete Sekundäreinheit des stufenlosen Getriebes das Hohlrad des Summierungsgetriebes antreibt und der Planetenträger das Abtriebselement des Summierungsgetriebes bildet. Bei dem erfindungsgemäßen Leistungsverzweigungsgetriebe wird für einen Stillstand des Fahrzeugs bei laufendem Antriebsmotor die Verstellpumpe derart in eine erste Stellrichtung verstellt, in der der hydraulische Motor in einer Rückwärtsdrehrichtung angetrieben ist, dass das von dem hydraulischen Motor angetriebene Hohlrad eine zu dem Sonnenrad entgegengesetzte Drehrichtung aufweist und die Umfangsgeschwindigkeit des Sonnenrades und die Umfangsgeschwindigkeit des von dem hydraulischen Motor angetrieben Hohlrades betragsmäßig gleich sind. Bei dem erfindungsgemäßen Leistungsverzweigungsgetriebe kann durch eine entsprechende Verstellung der

Verstellpumpe in eine erste Stelleinrichtung auf einfache Weise erzielt werden, dass das von dem hydraulischen Motor angetriebene Hohlrad in entgegengesetzte Drehrichtung wie das von dem Antriebsmotor angetrieben Sonnenrad angetrieben wird und die entgegengesetzt zum Sonnenrad liegende Umfangsgeschwindigkeit des Hohlrades vom Betrag gleich der Umfangsgeschwindigkeit des Sonnenrades ist. Hierbei drehen die Planetenräder des Summierungsgetriebes um die eigene Drehachse ohne den Planetenträger anzutreiben, so dass sich das Fahrzeug bei laufendem Antriebsmotor im Stillstand befindet.

Diese Einstellung des Fahrzeugstillstand durch entsprechende Verstellung der Verstellpumpe in eine erste Stelleinrichtung ermöglicht es, zur Erzielung einer Rückwärtsfahrt des Fahrzeugs die Verstellung der Verstellpumpe ausgehend von der Einstellung für den Fahrzeugstillstand in Richtung der ersten Stellrichtung zu erhöhen, so dass die Umfangsgeschwindigkeit des entgegengesetzt zu dem Sonnenrad angetriebenen Hohlrades betragsmäßig größer als die Umfangsgeschwindigkeit des Sonnenrades wird. Die Erhöhung der Verstellung der Verstellpumpe in Richtung der ersten Stellrichtung führt damit zu einer Erhöhung der Umfangsgeschwindigkeit des von dem hydraulischen Motor entgegengesetzt zu dem Sonnenrad angetrieben Hohlrades, so dass durch Erhöhen der Verstellung der Verstellpumpe in Richtung der ersten Stelleinrichtung ein Anfahren des Fahrzeugs in die Rückwärtsfahrt und eine Erhöhung der Fahrgeschwindigkeit in Rückwärtsfahrtrichtung erzielt wird. Durch den entsprechenden Verstellbereich der Verstellpumpe in der ersten Stellrichtung zwischen der Einstellung für den Fahrzeugstillstand und der maximalen Verstellung in der ersten Stellrichtung kann somit auf einfache Weise der Geschwindigkeitsbereich des Fahrzeugs für die Rückwärtsfahrt abgedeckt werden.

Die Einstellung des Fahrzeugstillstand durch entsprechende Verstellung der Verstellpumpe in eine erste Stelleinrichtung ermöglicht es weiterhin, zur Erzielung einer Vorwärtsfahrt des Fahrzeugs die Verstellung der Verstellpumpe ausgehend von der Einstellung für den Fahrzeugstillstand in Richtung einer Nullstellung zu verstellen, so dass die Umfangsgeschwindigkeit des Hohlrades verringert wird, und anschließend die Verstellpumpe in Richtung einer entgegengesetzten zweiten Stellrichtung verstellt wird, in der der hydraulische Motor in einer Vorwärtsdrehrichtung angetrieben ist, in der das von dem hydraulischen Motor angetriebene Hohlrad eine zu dem Sonnenrad gleichgerichtete Drehrichtung und Umfangsgeschwindigkeit aufweist. Die Verringerung der Verstellung der in die erste Stelleinrichtung verstellten Verstellpumpe in Richtung einer Nullstellung führt somit zu einer Verringerung der Umfangsgeschwindigkeit des von dem hydraulischen Motor entgegengesetzt zu dem Sonnenrad angetriebenen Hohlrades, so dass durch die Verringerung der Verstellung der Verstellpumpe in Richtung der Nullstellung ein Anfahren des Fahrzeugs in die Vorwärtsfahrt und eine Erhöhung der Fahrgeschwindigkeit in Vorwärtsfahrtrichtung erzielt wird. In der Nullstellung der Verstellpumpe ist der hydraulische Motor nicht angetrieben und stützt sich an der Verstellpumpe ab, so dass das Hohlrad nicht angetrieben ist. Das Sonnenrad wird mit der Drehzahl des Antriebsmotors angetrieben. In der Nullstellung der Verstellpumpe wird somit die Leistung bis auf die geringen volumetrischen Verluste, die aus dem durch die Stützwirkung des als geschlossenen Kreislauf ausgebildeten hydrostatischen Getriebes resultierenden Druck entstehen, rein mechanisch übertragen. Bei einer gegebenen Antriebsdrehzahl des das Sonnenrad antreibenden Antriebsmotors stellt sich an dem Planetenträger eine entsprechende Abtriebdrehzahl ein, so dass das Fahrzeug mit einer bestimmten Geschwindigkeit in der Vorwärtsfahrt betrieben wird. Durch ein Verstellen der Verstellpumpe in die zweite gegenüberliegende Stelleinrichtung, in der der hydraulische Motor in einer Vorwärtsdrehrichtung angetrieben ist, in der das von dem hydraulischen Motor angetriebene Hohlrad eine zu dem Sonnenrad gleichgerichtete Drehrichtung aufweist, kann somit durch eine mit der Verstellung der Verstellpumpe zunehmende Umfangsgeschwindigkeit des Hohlrades die Umfangsgeschwindigkeit und somit die Abtriebsdrehzahl des Planententrägers erhöht werden, so dass durch Erhöhen der Verstellung der Verstellpumpe in Richtung der zweiten Stelleinrichtung eine weitere Zunahme der Fahrgeschwindigkeit des Fahrzeugs in der Vorwärtsfahrt erzielt wird. Durch den entsprechenden Verstellbereich der Verstellpumpe in der ersten Stellrichtung zwischen der Einstellung für den Fahrzeugstillstand und der Nullstellung sowie den gesamten Verstellbereich in der entgegengesetzten zweiten Stellrichtung kann somit auf einfache Weise der Geschwindigkeitsbereich des Fahrzeugs für die Vorwärtsfahrt abgedeckt werden.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform eines erfindungsgemäßen Leistungsverzweigungsgetriebes,
- Figur 2: eine Ausgestaltungsform der Figur 1,
- Figur 3: eine alternative Ausgestaltungsform der Figur 1,
- Figur 4: eine Weiterbildung der Figur 1,
- Figur 5: eine weitere Ausgestaltungsform der Figur 1,
- Figur 6: eine weitere Ausgestaltungsform der Erfindung,
- Figur 7: unterschiedliche Betriebszustände des erfindungsgemäßen Leistungsverzweigungsgetriebes und
- Figur 8: eine zweite Ausführungsform eines erfindungsgemäßen Leistungsverzweigungsgetriebes.

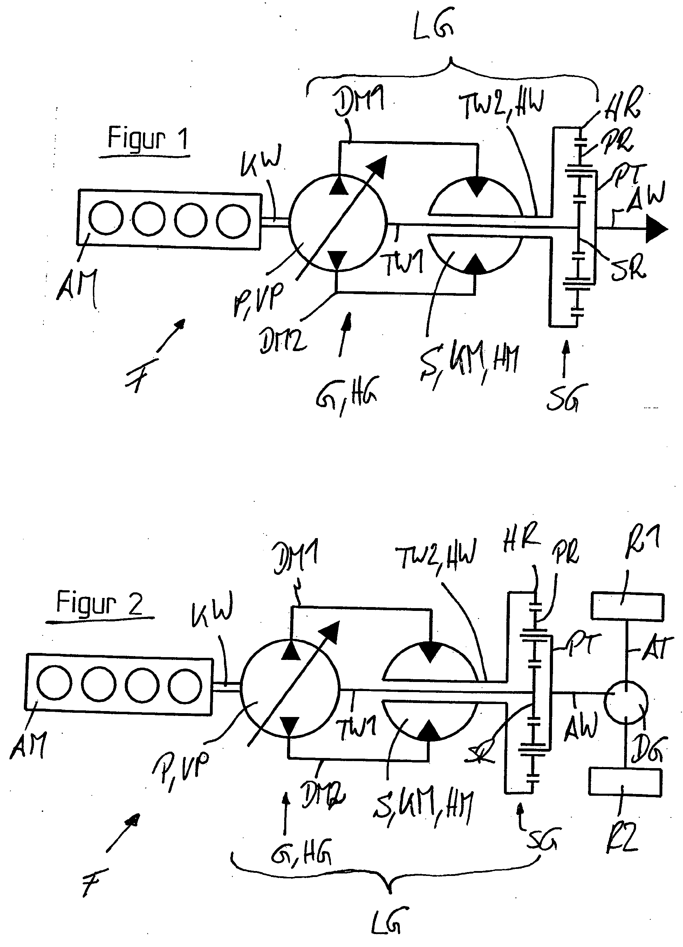

In der Figur 1 ist ein Fahrantrieb F eines Fahrzeugs mit einem erfindungsgemäßen Leistungsverzweigungsgetriebe LG dargestellt.

Das Leistungsverzweigungsgetriebe LG ist von einem stufenloses Getriebe G und einem Summierungsgetriebe SG gebildet. Das stufenlose Getriebe G weist eine Primäreinheit P und eine von der Primäreinheit P in beide Drehrichtungen antreibbare Sekundäreinheit S auf. Die Primäreinheit P des stufenlosen Getriebes G ist eingangsseitig von einem im dargestellten Ausführungsbeispiel als Verbrennungsmotor ausgebildeten Antriebsmotor AM des Fahrzeugs angetrieben und steht ausgangsseitig zum Antrieb mit dem Sonnenrad SR als ersten Antriebselement des als Planetengetriebe ausgebildeten Summierungsgetriebes SG in trieblicher Verbindung. Die Sekundäreinheit S des stufenlosen Getriebes G steht ausgangseitig zum Antrieb mit einem Hohlrad HR als zweitem Antriebselement des als Planetengetriebe ausgebildeten Summierungsgetriebes SG in trieblicher Verbindung. Der bevorzugt mehrere Planetenräder PR tragende Planetenträger PT des als Planetengetriebes ausgebildeten Summierungsgetriebes SG bildet das Abtriebselement des Planetengetriebes und ist mit einem in der Figur 1 nicht näher dargestellten Antrieb mittels einer Abtriebswelle AW trieblich verbunden.

Die Primäreinheit P des stufenlosen Getriebes G weist eine Triebwelle TW1 auf, die ausgangsseitig direkt und ohne zwischengeschaltete Kupplungseinrichtung mit dem Sonnenrad SR des Summierungsgetriebes SG trieblich verbunden ist. Eingangsseitig steht die Triebwelle TW1 der Primäreinheit P direkt mit einer Abtriebswelle KW, beispielsweise der Kurbelwelle eines als Verbrennungsmotors ausgebildeten Antriebsmotors AM, in trieblicher Verbindung. Die Sekundäreinheit S des stufenlosen Getriebes G weist eine Triebwelle TW2 auf, die direkt und ohne zwischengeschaltete Kupplungseinrichtung mit dem Hohlrad HR des Summierungsgetriebes SG in trieblicher Verbindung steht.

In der Figur 1 ist das von dem stufenlosen Getriebe G und dem Summierungsgetriebe SG gebildete Leistungsverzweigungsgetriebe LG koaxial zur der Abtriebswelle AW des Antriebsmotors AM angeordnet. Weiterhin sind die Primäreinheit P, die Sekundäreinheit S und das Summierungsgetriebe SG koaxial angeordnet, wobei die Sekundäreinheit S zwischen der Primäreinheit P und dem Summierungsgetriebe SG und somit in axialer Richtung hinter, bevorzugt unmittelbar hinter, der Primäreinheit P angeordnet ist. Die Primäreinheit P ist axialer Richtung hinter der Antriebsmaschine AM angeordnet.

Die Triebwelle TW2 der hinter der Primäreinheit P angeordneten Sekundäreinheit S ist als Hohlwelle HW ausgebildet, durch die die koaxial angeordnete Triebwelle TW1 der Primäreinheit P, die bevorzugt als Vollwelle ausgebildet ist, zu dem hinter der Sekundäreinheit S angeordneten Summierungsgetriebe SG hindurch geführt ist.

Das stufenlose Getriebe G ist im dargestellten Ausführungsbeispiel als hydrostatisches Getriebe HG ausgeführt, bei dem die Primäreinheit P als im Fördervolumen stufenlos verstellbare Verstellpumpe VP und die Sekundäreinheit S von einem im Schluckvolumen konstanten Konstantmotor KM als hydraulischen Motor HM gebildet ist, der im geschlossenen Kreislauf mittels Druckmittelleitungen DM1 und DM2 mit der Verstellpumpe VP verbunden ist. Die Verstellpumpe VP ist ausgehend von einer Nullstellung mit Fördervolumen Null in beide Förderrichtungen verstellbar.

Die Verstellpumpe VP und der hydraulische Motor HM sind bevorzugt jeweils als Axialkolbenmaschinen in Schrägscheibenbauweise ausgebildet. Die Verstellpumpe VP und der hydraulische Motor HM sind weiterhin bevorzugt als Kompaktgetriebe in einer Back-to-Back-Anordnung unmittelbar aneinandergebaut, in der die Druckmitteleinlässe und die Druckmittelauslässe der Verstellpumpe VP und des hydraulischen Motors HM aneinander angrenzend angeordnet sind. Hierdurch können die Verstellpumpe VP und der hydraulische Motor HM mit einer gemeinsamen Steuerbodenaufnahme versehen werden, die kurze Druckmittelverbindung ermöglicht. Weiterhin ermöglicht eine Back-to-Back-Anordnung der Verstellpumpe VP und des hydraulischen Motors HM eine kompakte Bauweise des stufenlosen Getriebes G in axialer Richtung, wodurch geringe Abmessungen des erfindungsgemäßen Leistungsverzweigungsgetriebes LG in axialer Richtung erzielt werden.

In der Figur 2 ist ein Fahrantrieb F eines mehrspurigen Fahrzeugs, beispielsweise eines Kraftfahrzeugs, mit dem Leistungsverzweigungsgetriebe LG der Figur 1 näher dargestellt, bei dem der Abtrieb von einer mit zwei Antriebsrädern R1, R2 versehenen Antriebsachse AT gebildet ist, die ein Differentialgetriebe DG aufweist. Die Abtriebswelle AW des Summierungsgetriebes SG steht hierbei zum Antrieb mit dem Differentialgetriebe DG der Antriebsachse AT in trieblicher Verbindung.

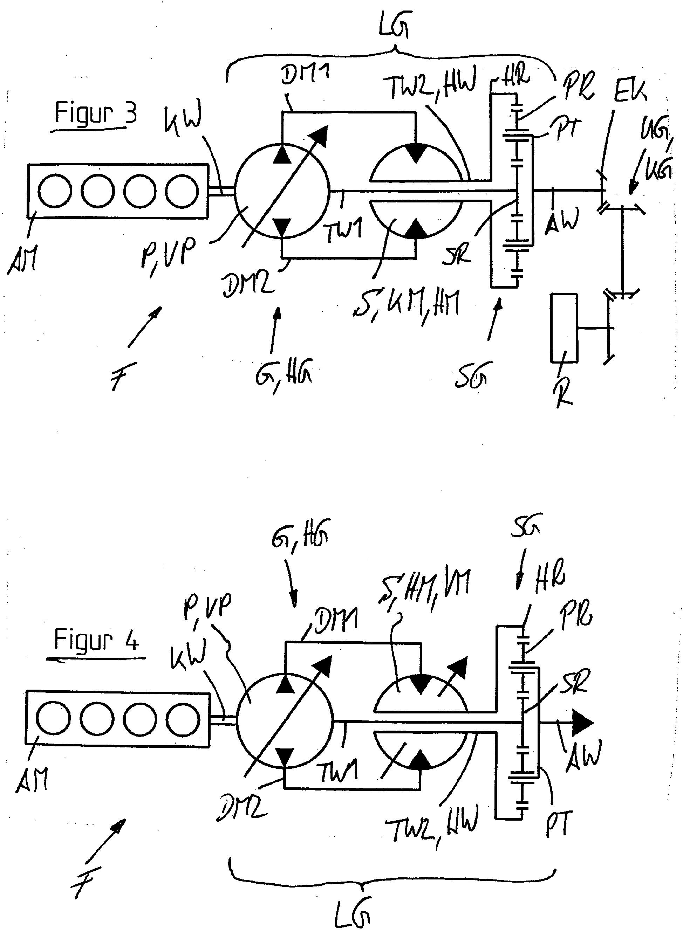

In der Figur 3 ist ein Fahrantrieb F eines einspurigen Kraftrades mit dem Leistungsverzweigungsgetriebe LG der Figur 1 näher dargestellt, bei dem der Abtrieb von einem einzelnen Antriebsrad R gebildet ist, das mittels eines Übertragungsgetriebes UG mit der Abtriebswelle AW des Summierungsgetriebes SG verbunden ist. Im dargestellten Ausführungsbeispiel ist das Übertragungsgetriebe UG als Kegelradgetriebe KG ausgebildet, wobei die Abtriebswelle AW des Summierungsgetriebes SG zum Antrieb mit einem Eingangskegelrad EK des Kegelradgetriebe KG in trieblicher Verbindung steht.

In der Figur 4 ist ein Leistungsverzweigungsgetriebe LG dargestellt, bei dem die als hydraulischer Motor HM ausgebildete Sekundäreinheit S des stufenlosen Getriebes G als im Schluckvolumen stufenlos verstellbarer Verstellmotor VM ausgebildet ist.

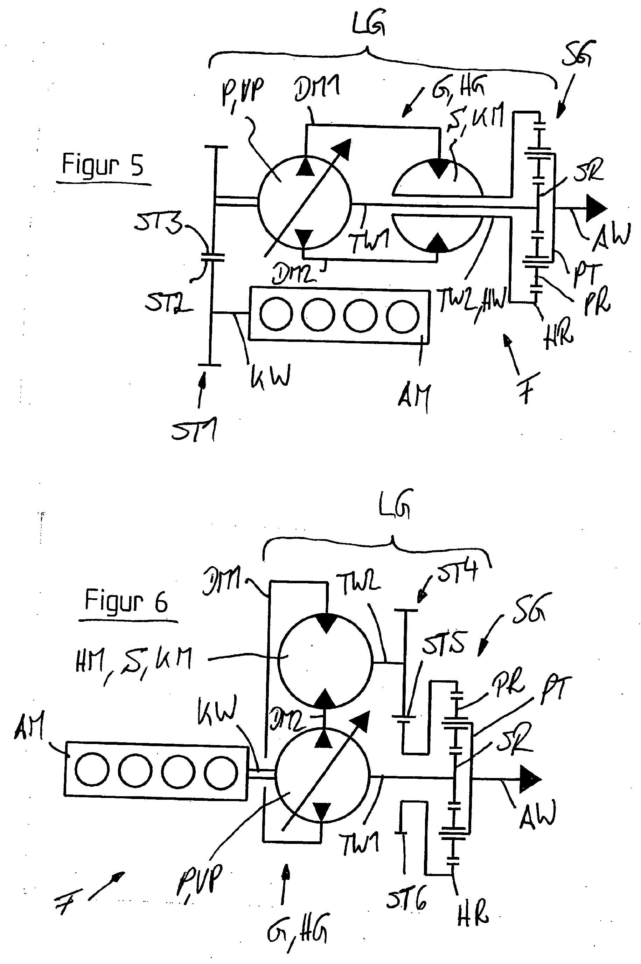

Die Figur 5 zeigt eine Ausführungsform eines Fahrantriebs F mit einem Leistungsverzweigungsgetriebe LG der Figur 1 bis 4, bei dem anstelle der koaxialen Anordnung des Leistungsverzweigungsgetriebe LG zu dem Antriebsmotor AW, bei der die Triebwelle TW1 der Primäreinheit P des stufenlosen Getriebes G direkt mit der Abtriebswelle KW des Antriebsmotors AM gemäß der Figuren 1 bis 4 trieblich verbunden ist, das Leistungsverzweigungsgetriebe LG achsparallel zu der Abtriebswelle KW der Antriebsmaschine AM angeordnet ist und die Triebwelle TW1 der Primäreinheit P unter Zwischenschaltung einer Stirnradgetriebestufe ST1 mit der Abtriebswelle KW des Antriebsmotors AM in trieblicher Verbindung steht. Die Stirnradgetriebestufe ST1 besteht aus einem mit der Abtriebswelle KW verbundenen Stirnrad ST2 und einem mit der Triebwelle TW1 verbundenen Stirnrad ST3. Die achsparallel Anordnung des Leistungsverzweigungsgetriebe LG ermöglicht eine in Längsrichtung überlagerte Anordnung, bei der das Leistungsverzweigungsgetriebe LG innerhalb der axialen Baulänge des Antriebsmotors AM abgeordnet ist.

In der Figur 6 ist eine Ausgestaltungsform des Leistungsverzweigungsgetriebes LG dargestellt, bei der anstelle der koaxialen Anordnung der Primäreinheit P und der Sekundäreinheit S des stufenlosen Getriebes G gemäß den Figuren 1 bis 5 das stufenlose Getriebe G in einer aufgelösten Bauweise ausgeführt ist, bei der die Sekundäreinheit S achsparallel zu der Primäreinheit P angeordnet ist. Die parallel zu der Triebwelle TW1 der Primäreinheit P angeordnete Triebwelle TW2 der Sekundäreinheit S steht hierbei unter Zwischenschaltung einer Stirnradgetriebestufe ST4 mit dem Hohlrad HR des Summierungsgetriebes SG in trieblicher Verbindung. Die Stirnradgetriebestufe ST4 besteht aus einem an der Triebwelle TW2 der Sekundäreinheit S angeordneten Stirnrad ST5 und einem an dem Hohlrad HR angeformten Stirnrad ST6. Die Triebwelle TW2 der Sekundäreinheit S kann hierbei als Vollwelle ausgebildet sein. Die achsparallele Anordnung der Primäreinheit P und der Sekundäreinheit S ermöglicht durch eine Überlagerung der Primäreinheit und der Sekundäreinheit in axialer Richtung eine kompakte Bauweise des Leistungsverzweigungsgetriebes mit einer kurzen axialen Baulänge.

Bei der Figur 6 ist die Primäreinheit P und das Summierungsgetriebe SG koaxial zu der Abtriebswelle AW des Antriebsmotors AM angeordnet, wobei die Triebwelle TW1 direkt mit der Abtriebswelle KW des Antriebsmotors AM trieblich verbunden ist. Es versteht sich, dass die aufgelöste Bauweise des stufenlosen Getriebes G der Figur 6 mit einer achsparallelen Anordnung des Leistungsverzweigungsgetriebe LG zu der Abtriebswelle KW der Antriebsmaschine AM gemäß der Figur 5 kombiniert werden kann, bei der die Triebwelle TW1 der Primäreinheit P unter Zwischenschaltung einer Stirnradgetriebestufe ST1 mit der Abtriebswelle KW des Antriebsmotors AM in trieblicher Verbindung steht

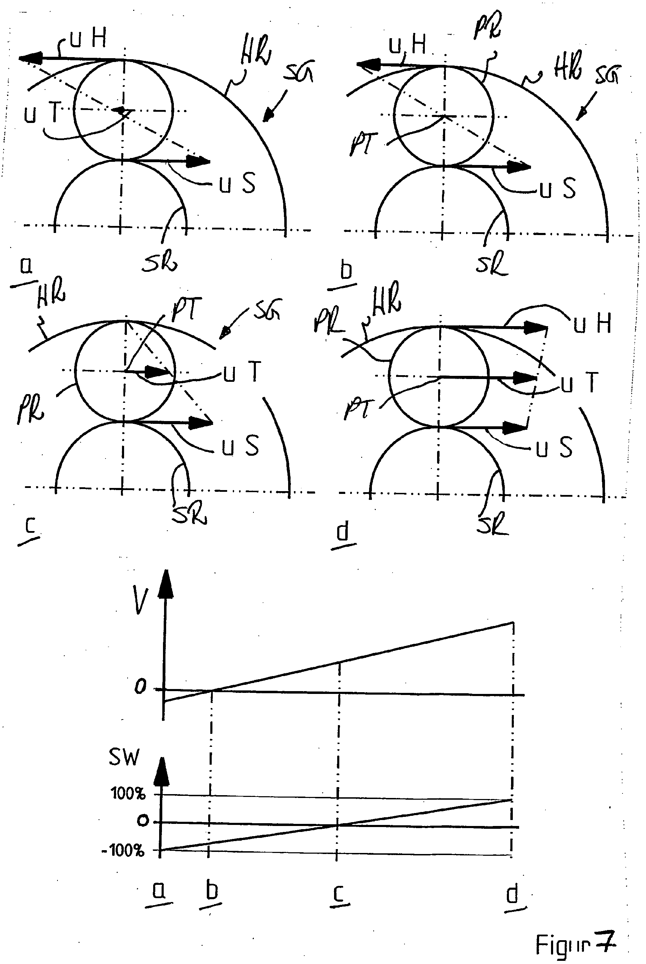

In der Figur 7 sind für eine gegebene und gleichbleibende Antriebsdrehzahl des Antriebsmotors AM und somit einer gleichen Eingangsdrehzahl des von dem Antriebsmotor AM über die Triebwelle TW1 und den Durchtrieb der Verstellpumpe VP angetriebenen Sonnenrades SR des Summierungsgetriebes SG unterschiedliche Betriebszustände a, b, c, d des erfindungsgemäßen Leistungsverzweigungstriebes SG der Figuren 1 bis 6 dargestellt.

Für die Betriebszustände a, b, c, d sind in dem oberen Diagramm die Fahrgeschwindigkeit v des Fahrzeugs und in dem unteren Diagramm die Verstellung SW der ausgehend von einer Nullstellung 0 in zwei Stellrichtungen verstellbaren Verstellpumpe VP dargestellt. Bei einer als Axialkolbenmaschine in Schrägscheibenbauweise ausgebildeten Verstellpumpe VP entspricht die Verstellung SW dem Schwenkwinkel einer in beide Schwenkrichtungen ausschwenkbaren und huberzeugenden Schrägscheibe.

Die oberen Darstellungen der Figur 7 zeigen einen Ausschnitt des Summierungsgetriebes SG für die Betriebszustände a, b, c, d. Die aus der gleichbleibenden Drehzahl des Antriebsmotors AM resultierende Umfangsgeschwindigkeit des Sonnenrades SR ist in den Darstellungen mit uS bezeichnet. Mit uH ist in den Darstellungen die Umfangsgeschwindigkeit des von dem hydraulischen Motor HM angetrieben Hohlrades HR bezeichnet, die sich im Betrag und der Richtung durch entsprechende Veränderung der Verstellung der Verstellpumpe VP verändern lässt. In den Darstellungen ist mit uT die sich ergebende Umfangsgeschwindigkeit des das Abtriebselement des Summierungsgetriebes SG bildenden Planetenträgers PT verdeutlicht.

Der Zustand a entspricht einem Zustand für die Rückwärtsfahrt des Fahrzeugs. Die Verstellpumpe VP ist in eine erste Stelleinrichtung verstellt, in der der hydraulische Motor HM in Rückwärtsrichtung angetrieben wird und sich das Hohlrad HR in entgegengesetzter Drehrichtung zu dem von dem Antriebsmotor AM angetriebenen Sonnenrad SR dreht. In dem Zustand a ist die Verstellpumpe VP maximal in die erste Stellrichtung verstellt, so dass sich an dem von dem hydraulischen Motor HM angetriebenen Hohlrad HR eine der Umfangsgeschwindigkeit uS des Sonnenrads SR entgegengerichtete Umfangsgeschwindigkeit uH einstellt, die betragsmäßig geringfügig größer als die Umfangsgeschwindigkeit uS des Sonnenrads SR ist. An dem Planetenträger PT stellt sich dadurch eine im Betrag kleine Umfangsgeschwindigkeit uT und eine daraus resultierende Abtriebsdrehzahl des Planetenträgers PT ein, mit der das Fahrverhalten eines Fahrzeugs, beispielsweise eines Kraftfahrzeugs, oder eines Kraftrades im Rückwärtsgang abgebildet werden kann.

Der Zustand b stellt das Leistungsverzweigungsgetriebe LG für ein im Stillstand stehendes Fahrzeug mit Fahrgeschwindigkeit 0 dar. Die Umfangsgeschwindigkeit uH des von dem hydraulischen Motor HM angetriebenen Hohlrades HR ist derart eingestellt, dass die Umfangsgeschwindigkeit uH des Hohlrades HR der Umfangsgeschwindigkeit uS des Sonnenrades SR entgegensetzt, jedoch vom gleichen Betrag wie die Umfangsgeschwindigkeit uS des Sonnenrades SR ist. Hierdurch drehen die Planetenräder PR um die eigene Achse ohne den Planententräger PT anzutreiben. Wie aus dem Verstelldiagramm der Verstellpumpe VP zu entnehmen ist, ist für diesen Betriebszustand b die Verstellung SW der Verstellpumpe VP gegenüber dem Betriebszustand a in der ersten Stellrichtung um einen gewissen Betrag zurückgenommen und die Verstellung SW der Verstellpumpe VP in der ersten Stellrichtung gegenüber dem Betriebszustand a in Richtung der Nullstellung 0 verringert.

Wie aus dem Verstelldiagramm der Verstellpumpe VP zu entnehmen ist, kann ausgehend von der Einstellung für den Fahrzeugstillstand (Betriebszustand b) durch Erhöhung der Verstellung SW in Richtung der ersten Stellrichtung das Fahrzeug in Rückwärtsfahrtrichtung beschleunigt werden und somit die Rückwärtsfahrt eingestellt werden und entsprechend durch Verringerung der Verstellung SW in der ersten Stellrichtung das Fahrzeug in Vorwärtsfahrtrichtung beschleunigt werden und somit die Vorwärtsfahrt eingestellt werden.

In dem Betriebszustand c befindet sich die Verstellpumpe VP in der Nullstellung 0, in der der hydraulische Motor HM nicht angetrieben ist und sich der Motor HM über den geschlossenen Kreislaufs des hydrostatische Getriebes HG an der Verstellpumpe VP abstützt. In dem Betriebszustand c steht somit das Hohlrad HR still und das Sonnenrad SR ist über die Triebwelle TW1 der Verstellpumpe VP mit der Drehzahl des Antriebsmotors AM angetrieben. Die Leistung wird in diesem Betriebszustand c abgesehen von volumetrischen Verlusten, die aus dem durch die Stützwirkung des hydrostatischen Getriebes HG resultierenden Druck im geschlossenen Kreislauf entstehen, rein mechanisch übertragen. Die Abtriebsdrehzahl des Planetenträgers PT entspricht der am Planetenträger PT resultierenden Umfangsgeschwindigkeit uT. Wie aus dem Fahrgeschwindigkeitsdiagramm des Fahrzeugs zu entnehmen ist, befindet sich das Fahrzeug in diesem Betriebszustand c, in dem die Leistungsübertragung rein mechanisch erfolgt, in der Vorwärtsfahrt und fährt mit einer bestimmten Fahrgeschwindigkeit.

Ausgehend von dem Betriebszustand c kann durch Verstellen der Verstellpumpe VP in eine der ersten Stellrichtung entgegengesetzten zweiten Stellrichtung, in der der hydraulische Motor HM in Vorwärtsrichtung angetrieben wird und sich das Hohlrad HR in gleicher Drehrichtung wie das von dem Antriebsmotor AM angetriebenen Sonnenrad SR dreht, die Fahrgeschwindigkeit des Fahrzeugs in Vorwärtsfahrtrichtung erhöht werden. Der Betriebszustand d zeigt eine derartige Verstellung der Verstellpumpe VP in die entgegengesetzte zweite Stellrichtung. Im Betriebszustand d ist die Verstellpumpe VP maximal in die zweite Stellrichtung verstellt. Das von dem hydraulischen Motor HM in gleicher Drehrichtung wie das Sonnenrad SR angetriebene Hohlrad HR weist eine der Umfangsgeschwindigkeit uS des Sonnenrades SR gleichgerichtete Umfangsgeschwindigkeit uH auf. In dem Betriebszustand d erfolgt die Leistungsübertragung sowohl mechanisch als auch hydrostatisch. Die Abtriebsdrehzahl des Planententrägers PT ergibt sich aus den eingestellten Umfangsgeschwindigkeiten uS des von dem Antriebsmotor AM angetriebenen Sonnenrades SR und uH des von dem hydraulischen Motor HM angetrieben Hohlrades HR.

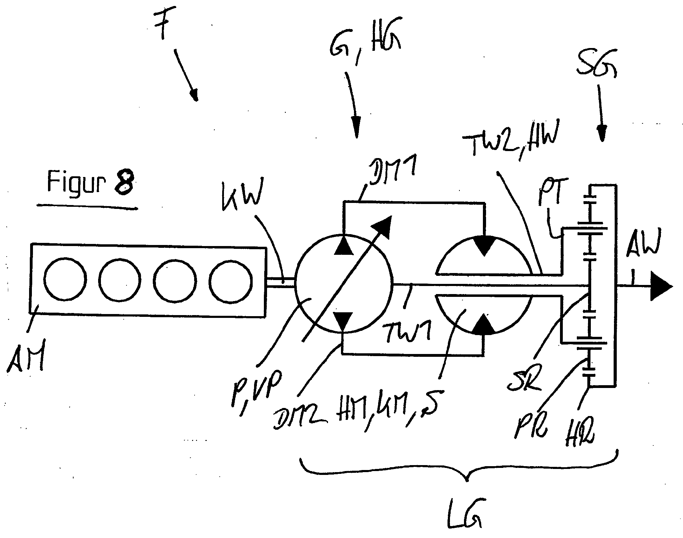

In der Figur 8 ist eine zweite Ausführungsform der Erfindung dargestellt, bei der die Sekundäreinheit S des stufenlosen Getriebes G ausgangseitig zum Antrieb mit dem Planetenträger PT als zweitem Antriebselement des als Planetengetriebes ausgebildeten Summierungsgetriebes SG in trieblicher Verbindung steht und das Hohlrad HR des als Planetengetriebes ausgebildeten Summierungsgetriebes SG das Abtriebselement des Planetengetriebes bildet, das mit der Abtriebswelle AW trieblich verbunden ist. Die Triebwelle TW2 der Sekundäreinheit S steht hierbei direkt und ohne zwischengeschaltete Kupplungseinrichtung mit dem Planetenträger PT des Summierungsgetriebes SG in trieblicher Verbindung. Das Sonnenrad SR des Summierungsgetriebes SG steht mit der Triebwelle TW1 der Primäreinheit P in trieblicher Verbindung. Das stufenlose Getriebe G der Figur 8 ist analog zu den Figuren 1 bis 4 als Kompaktgetriebe ausgeführt, das koaxial zu der Abtriebswelle KW des Antriebsmotors AM angeordnet ist. Es versteht sich, dass die Wahl des Antriebs und Abtriebs des Summierungsgetriebes SG der Figur 8 mit einer achsparallelen Anordnung gemäß der Figur 5 und/oder einer aufgelösten Bauweise des stufenlosen Getriebes G gemäß der Figur 6 kombiniert werden kann. Die in der Figur 8 als Konstantmotor KM ausgebildete Sekundäreinheit S kann alternativ wie in der Figur 4 als Verstellmotor VM ausgebildet werden. Die Ausführung des Antriebs des Summierungsgetriebes SG durch die Sekundäreinheit S und des Abtriebs des Summierungsgetriebes SG kann somit ebenfalls bei den Ausführungsbeispielen der Figuren 1 bis 6 angewendet werden.

Das erfindungsgemäße Leistungsverzweigungsgetriebe LG ermöglicht es ohne Kupplungseinrichtungen in dem Summierungsgetriebe SG den Fahrgeschwindigkeitsbereich eines als Kraftfahrzeugs oder Kraftrades ausgebildeten Fahrzeugs für die Rückwärtsfahrt und die Vorwärtsfahrt abzubilden, wodurch das erfindungsgemäße Leistungsverzweigungsgetriebe LG einen hohen Wirkungsgrad und eine hohe Energieeffizienz aufweist und eine leichte, kostengünstige und im Bauraum kompakte Bauform ermöglicht. Bei dem erfindungsgemäßen Leistungsverzweigungsgetriebe LG kann der Verstellbereich der Verstellpumpe VP zu beiden Stellrichtungen vollständig ausgenutzt werden, wobei die anteilige Aufteilung des Verstellbereichs zwischen den Geschwindigkeitsbereichen für die Vorwärtsfahrt und der Rückwärtsfahrt dem Fahrverhalten von Kraftfahrzeugen oder Krafträdern optimal entspricht. Mit dem erfindungsgemäßen Leistungsverzweigungsgetriebe LG kann die Spreizung eines hydrostatischen Getriebes, das nur primärseitig verstellbar ist und von einer Verstellpumpe VP und einem im geschlossenen Kreislauf betrieben Konstantmotor KM gebildet ist, derart erweitert werden, dass bei kleinen Schluckvolumen der Verstellpumpe und des Konstantmotors der gesamte Geschwindigkeitsbereich und die volle Zugkraft eines konventionellen mehrgängigen Schaltgetriebes abgedeckt werden kann. Durch geeignete Auslegung der Durchmesserverhältnisse des Sonnenrades SR, der Planetenräder PR und des Hohlrades HR des als Planetengetriebe ausgebildeten Summierungsgetriebes SG kann der Bereich mit reiner mechanischer Leistungsübertragung (Bereich c in der Figur 7) in den Betriebsbereich des Fahrzeugs mit den größten Zeitanteilen gelegt werden, so dass sich der Gesamtwirkungsgrad des Fahrzeugs weiter verbessern lässt.

## Patentansprüche

1. Leistungsverzweigungsgetriebe (LG) eines Fahrantriebs (F) eines Fahrzeugs, das ein stufenloses Getriebe (G) und ein Summierungsgetriebe (SG) umfasst, wobei das stufenlose Getriebe (G) als hydrostatisches Getriebe (HG) ausgebildet ist und eine Primäreinheit (P) und eine von der Primäreinheit (P) in beide Drehrichtungen antreibbare Sekundäreinheit (S) umfasst, wobei die Primäreinheit (P) des stufenlosen Getriebes (G) von einem Antriebsmotor (AM), insbesondere einem Verbrennungsmotor, des Fahrzeugs angetrieben ist und einen Durchtrieb zum Antrieb eines ersten Antriebselements eines als Planetengetriebes ausgebildeten Summierungsgetriebes (SG) aufweist, die Sekundäreinheit (S) des stufenlosen Getriebes (G) zum Antrieb mit einem zweiten Antriebselement des als Planetengetriebes ausgebildeten Summierungsgetriebes (SG) in trieblicher Verbindung steht und ein Abtriebselement des als Planetengetriebe ausgebildeten Summierungsgetriebes (SG) mit einem Radantrieb trieblich in Verbindung steht, **dadurch gekennzeichnet, dass** die Primäreinheit (P) als in dem Fördervolumen beidseitig verstellbare Verstellpumpe (VP) und die Sekundäreinheit (S) als im geschlossenen Kreislauf angeschlossener hydraulischer Motor (HM) ausgebildet ist und dass die Primäreinheit (P) des stufenlosen Getriebes (G) eine Triebwelle (TW1) aufweist, die eingangsseitig von dem Antriebsmotor (AM) angetrieben ist und ausgangseitig direkt und ohne zwischengeschaltete Kupplungseinrichtung mit dem Sonnenrad (SR) des Summierungsgetriebes (SG) zu dessen Antrieb trieblich verbunden ist, und die Sekundäreinheit (S) des stufenlosen Getriebes (G) eine Triebwelle (TW2) aufweist, die ohne zwischengeschaltete Kupplungseinrichtung mit einem Hohlrad (HR) oder einem Planetenträger (PT) des Summierungsgetriebes (SG) in trieblicher Verbindung steht und der Planetenträger (PT) oder das Hohlrad (HR) des Summierungsgetriebes (SG) ein Abtriebselement des Summierungsgetriebes (SG) bilden, das mit dem Radantrieb trieblich verbunden ist.

2. Leistungsverzweigungsgetriebe nach Anspruch 1, **dadurch gekennzeichnet, dass** die Triebwelle (TW1) der Primäreinheit (P) eingangsseitig direkt oder unter Zwischenschaltung einer Stirnradgetriebestufe (ST1) mit einer Abtriebswelle (KW) des Antriebsmotors (AM) verbunden ist.

3. Leistungsverzweigungsgetriebe nach Anspruch 1 oder 2, **dadurch gekennzeichnet, dass** die Sekundäreinheit (S) und das Summierungsgetriebe (SG) koaxial zu der Primäreinheit (P) angeordnet sind, wobei die Sekundäreinheit (S) zwischen der Primäreinheit (P) und dem Summierungsgetriebe (SG) angeordnet ist.

4. Leistungsverzweigungsgetriebe nach Anspruch 3, **dadurch gekennzeichnet, dass** die Triebwelle (TW2) der Sekundäreinheit (S) als Hohlwelle (HW) ausgebildet ist, durch die sich die Triebwelle (TW1) der Primäreinheit (P) erstreckt.

5. Leistungsverzweigungsgetriebe nach einem der Ansprüche 1 bis 4, **dadurch gekennzeichnet, dass** die Triebwelle (TW2) der Sekundäreinheit (S) direkt mit dem Hohlrad (HR) oder dem Planetenträger (PT) des Summierungsgetriebes (SG) in trieblicher Verbindung steht.

6. Leistungsverzweigungsgetriebe nach einem der Anspruch 1 oder 2, **dadurch gekennzeichnet, dass** das Summierungsgetriebe (SG) koaxial zu der Primäreinheit (P) angeordnet ist und die Sekundäreinheit (S) achsparallel zu der Primäreinheit (P) angeordnet ist.

7. Leistungsverzweigungsgetriebe nach Anspruch 6, **dadurch gekennzeichnet, dass** die Triebwelle (TW2) der Sekundäreinheit (S) unter Zwischenschaltung einer Stirnradgetriebestufe (ST4) mit dem Hohlrad (HR) oder dem Planetenträger (PT) des Summierungsgetriebes (SG) in trieblicher Verbindung steht.

8. Leistungsverzweigungsgetriebe nach einem der Ansprüche 1 bis 7, **dadurch gekennzeichnet, dass** der Radantrieb als Antriebsachse (AT) eines mehrspurigen Fahrzeugs ausgebildet ist, wobei das Abtriebselement des Summierungsgetriebes (SG) mit einem Differentialgetriebe (DG) der Antriebsachse (AT) trieblich verbunden ist.

9. Leistungsverzweigungsgetriebe nach einem der Ansprüche 1 bis 7, **dadurch gekennzeichnet, dass** der Radantrieb als Einzelradantrieb eines einspurigen Kraftrades ausgebildet ist, wobei das Abtriebselement des Summierungsgetriebes (SG) mit einem Kegelrad (EK) eines das Einzelrad antreibenden Kegelradgetriebes (KG) oder einem Kettenrad eines das Einzelrad antreibenden Kettengetriebes trieblich verbunden ist.

10. Leistungsverzweigungsgetriebe nach einem der Ansprüche 1 bis 9, **dadurch gekennzeichnet, dass** der hydraulische Motor (HM) als im Schluckvolumen fester Konstantmotor (KM) ausgebildet ist.

11. Leistungsverzweigungsgetriebe nach einem der Ansprüche 1 bis 9, **dadurch gekennzeichnet, dass** der hydraulische Motor (HM) als im Schluckvolumen verstellbarer Verstellmotor (VM) ausgebildet ist.

12. Leistungsverzweigungsgetriebe nach einem der Ansprüche 1 bis 11, **dadurch gekennzeichnet, dass** die Verstellpumpe (VP) und der hydraulische Motor (HM) als Kompaktgetriebe in einer koaxialen Back-to-Back-Bauweise koaxial ausgeführt sind.

13. Verfahren zum Betrieb eines Leistungsverzweigungsgetriebes (LG) eines Fahrantriebs (F) eines Fahrzeugs nach einem der vorangegangenen Ansprüche, wobei die als beidseitig verstellbare Verstellpumpe (VP) ausgebildete Primäreinheit des stufenlosen hydrostatischen Getriebes (HG) das Sonnenrad (SR) des als Planetengetriebes ausgebildeten Summierungsgetriebes (SG) antreibt und die von dem hydraulischen Motor (HM) gebildete Sekundäreinheit des stufenlosen Getriebes (HG) das Hohlrad (HR) des Summierungsgetriebes (SG) antreibt und der Planetenträger (PT) das Abtriebselement des Summierungsgetriebes (SG) bildet, **dadurch gekennzeichnet, dass** für einen Stillstand des Fahrzeugs bei laufendem Antriebsmotor (AM) die Verstellpumpe (VP) derart in eine erste Stellrichtung verstellt wird, in der der hydraulische Motor (HM) in einer Rückwärtsdrehrichtung angetrieben ist, dass das von dem hydraulischen Motor (HM) angetriebene Hohlrad (HR) eine zu dem Sonnenrad (SR) entgegengesetzte Drehrichtung aufweist und die Umfangsgeschwindigkeit (uS) des Sonnenrades (SR) und die Umfangsgeschwindigkeit (uH) des von dem hydraulischen Motor (HM) angetrieben Hohlrades (HR) betragsmäßig gleich sind.

14. Verfahren nach Anspruch 13, **dadurch gekennzeichnet, dass** zur Erzielung einer Rückwärtsfahrt des Fahrzeugs die Verstellung der Verstellpumpe (VP) ausgehend von der Einstellung für den Fahrzeugstillstand in Richtung der ersten Stellrichtung erhöht wird, so dass die Umfangsgeschwindigkeit (uH) des Hohlrades (HR) größer als die Umfangsgeschwindigkeit (uS) des Sonnenrades (SR) ist.

15. Verfahren nach Anspruch 13 oder 14, **dadurch gekennzeichnet, dass** zur Erzielung einer Vorwärtsfahrt des Fahrzeugs die Verstellung der Verstellpumpe (VP) ausgehend von der Einstellung für den Fahrzeugstillstand in Richtung einer Nullstellung verstellt wird, so dass die Umfangsgeschwindigkeit (uH) des Hohlrades (HR)verringert wird, und anschließend die Verstellpumpe (VP) in Richtung einer zweiten Stellrichtung verstellt wird, in der der hydraulische Motor (HM) in einer Vorwärtsdrehrichtung angetrieben ist, in der das von dem hydraulischen Motor (HM) angetriebene Hohlrad (HR) eine zu dem Sonnenrad (SR) gleichgerichtete Drehrichtung und Umfangsgeschwindigkeit (uH) aufweist.

## Claims

1. Power-split transmission (LG) of a traction drive (F) of a vehicle, which power-split transmission (LG) comprises a continuously variable transmission (G) and a summing transmission (SG), the continuously variable transmission (G) being configured as a hydrostatic transmission (HG) and comprising a primary unit (P) and a secondary unit (S) which can be driven in both rotational directions by the primary unit (P), the primary unit (P) of the continuously variable transmission (G) being driven by a drive engine (AM), in particular an internal combustion engine, of the vehicle and having a through-drive for driving a first drive element of the summing transmission (SG) which is configured as a planetary gear mechanism, the secondary unit (S) of the continuously variable transmission (G), for driving being drive-connected to a second drive element of the summing transmission (SG) which is configured as a planetary gear mechanism, and an output element of the summing transmission (SG) which is configured as a planetary gear mechanism being drive-connected to a wheel drive, **characterized in that** the primary unit (P) is configured as a variable displacement pump (VP), the delivery volume of which can be adjusted on both sides, and the secondary unit (S) is configured as a hydraulic motor (HM) which is connected in the closed circuit, and **in that** the primary unit (P) of the continuously variable transmission (G) has a drive shaft (TW1) which is driven on the input side by the drive engine (AM) and is drive-connected on the output side directly and without a clutch device being connected in between to the sun gear (SR) of the summing transmission (SG) in order to drive the latter, and the secondary unit (S) of the continuously variable transmission (G) has a drive shaft (TW2) which is drive-connected without a clutch device being connected in between to an internal gear (HR) or a planetary carrier (PT) of the summing transmission (SG), and the planetary carrier (PT) or the internal gear (HR) of the summing transmission (SG) forms an output element of the summing transmission (SG), which output element is drive-connected to the wheel drive.

2. Power-split transmission according to Claim 1, **characterized in that** the drive shaft (TW1) of the primary unit (P) is connected on the input side directly or with a spur gear mechanism stage (ST1) being connected in between to an output shaft (KW) of the drive engine (AM).

3. Power-split transmission according to Claim 1 or 2, **characterized in that** the secondary unit (S) and the summing transmission (SG) are arranged coaxially with respect to the primary unit (P), the secondary unit (S) being arranged between the primary unit (P) and the summing transmission (SG).

4. Power-split transmission according to Claim 3, **characterized in that** the drive shaft (TW2) of the secondary unit (S) is configured as a hollow shaft (HW), through which the drive shaft (TW1) of the primary unit (P) extends.

5. Power-split transmission according to one of Claims 1 to 4, **characterized in that** the drive shaft (TW2) of the secondary unit (S) is drive-connected directly to the internal gear (HR) or the planetary carrier (PT) of the summing transmission (SG).

6. Power-split transmission according to either of Claims 1 and 2, **characterized in that** the summing transmission (SG) is arranged coaxially with respect to the primary unit (P), and the secondary unit (S) is arranged axially parallel to the primary unit (P).

7. Power-split transmission according to Claim 6, **characterized in that** the drive shaft (TW2) of the secondary unit (S) is drive-connected with a spur gear mechanism stage (ST4) being connected in between to the internal gear (HR) or the planetary carrier (PT) of the summing transmission (SG).

8. Power-split transmission according to one of Claims 1 to 7, **characterized in that** the wheel drive is configured as a drive axle (AT) of a multi-track vehicle, the output element of the summing transmission (SG) being drive-connected to a differential transmission (DG) of the drive axle (AT).

9. Power-split transmission according to one of Claims 1 to 7, **characterized in that** the wheel drive is configured as an individual wheel drive of a single-track motorcycle, the output element of the summing transmission (SG) being drive-connected to a bevel gear (EK) of a bevel gear mechanism (KG) which drives the individual wheel or to a chain sprocket of a chain mechanism which drives the individual wheel.

10. Power-split transmission according to one of Claims 1 to 9, **characterized in that** the hydraulic motor (HM) is configured as a fixed motor (KM) with a fixed displacement.

11. Power-split transmission according to one of Claims 1 to 9, **characterized in that** the hydraulic motor (HM) is configured as a variable motor (VM) with an adjustable displacement.

12. Power-split transmission according to one of Claims 1 to 11, **characterized in that** the variable displacement pump (VP) and the hydraulic motor (HM) are coaxially configured as compact transmissions in a coaxial back-to-back design.

13. Method for operating a power-split transmission (LG) of a traction drive (F) of a vehicle according to one of the preceding claims, the primary unit, configured as a variable displacement pump (VP) which can be adjusted on both sides, of the continuously variable hydrostatic transmission (HG) driving the sun gear (SR) of the summing transmission (SG) which is configured as a planetary gear mechanism, and the secondary unit, formed by the hydraulic motor (HM), of the continuously variable transmission (HG) driving the internal gear (HR) of the summing transmission (SG), and the planetary carrier (PT) forming the output element of the summing transmission (SG), **characterized in that**, for a standstill of the vehicle when the drive engine (AM) is running, the variable displacement pump (VP) is adjusted in a first actuating direction, in which the hydraulic motor (HM) is driven in a reverse rotational direction, in such a way that the internal gear (HR) which is driven by the hydraulic motor (HM) has a rotational direction which is opposed to the sun gear (SR) and the circumferential velocity (uS) of the sun gear (SR) and the circumferential velocity (uH) of the internal gear (HR) which is driven by the hydraulic motor (HM) are identical in terms of magnitude.

14. Method according to Claim 13, **characterized in that**, in order to achieve reverse driving of the vehicle, the adjustment of the variable displacement pump (VP) is increased in the direction of the first actuating direction, starting from the setting for the vehicle standstill, with the result that the circumferential velocity (uH) of the internal gear (HR) is greater than the circumferential velocity (uS) of the sun gear (SR).

15. Method according to Claim 13 or 14, **characterized in that**, in order to achieve forward driving of the vehicle, the adjustment of the variable displacement pump (VP) is adjusted in the direction of a zero position, starting from the setting for the vehicle standstill, with the result that the circumferential velocity (uH) of the internal gear (HR) is reduced, and subsequently the variable displacement pump (VP) is adjusted in the direction of a second actuating direction, in which the hydraulic motor (HM) is driven in a forward rotational direction, in which the internal gear (HR) which is driven by the hydraulic motor (HM) has an identical rotational direction and circumferential velocity (uH) with respect to the sun gear (SR).

## Revendications

1. Transmission (LG) à répartition de puissance de l'entraînement de roulage (F) d'un véhicule,
présentant une transmission progressive (G) et une transmission additive (SG),
la transmission progressive (G) étant configurée comme transmission hydrostatique (HG) et présentant une unité primaire (P) et une unité secondaire (S) qui peut être entraînée dans les deux sens de rotation par l'unité primaire (P),
l'unité primaire (P) de la transmission progressive (G) étant entraînée par un moteur d'entraînement (AM) et en particulier un moteur à combustion interne du véhicule et présentant une transmission qui permet d'entraîner un premier élément d'entraînement d'une transmission additive (SG) configurée comme transmission à planétaire,
l'unité secondaire (S) de la transmission progressive (G) étant raccordée à entraînement à un deuxième élément d'entraînement de la transmission additive (SG) configurée comme transmission à planétaire et un élément entraîné de la transmission additive (SG) configurée comme transmission à planétaire étant raccordé à entraînement à un entraînement de roue,
**caractérisée en ce que**
l'unité primaire (P) est configurée comme pompe (VP) à cylindrée variable dont le débit de transport peut être ajusté dans les deux sens et l'unité secondaire (S) comme moteur hydraulique (HM) qui lui est raccordé en circuit fermé,
**en ce que** l'unité primaire (P) de la transmission progressive (G) présente un arbre d'entraînement (TW1) sont l'entrée est entraînée par le moteur d'entraînement (AM) et la sortie est raccordée directement et sans embrayage intermédiaire à la roue solaire (SR) de la transmission additive (SG) pour entraîner cette dernière,
**en ce que** l'unité secondaire (S) de la transmission progressive (G) présente un arbre d'entraînement (TW2) qui est raccordé à entraînement sans dispositif d'embrayage intermédiaire à une roue creuse (HR) ou à un porte-planétaire (PT) de la transmission additive (SG) et
**en ce que** le porte-planétaire (PT) ou la roue creuse (HR) de la transmission additive (SG) forment un élément entraîné de la transmission additive (SG) raccordé à entraînement à l'entraînement de roue.

2. Transmission à répartition de puissance selon la revendication 1, **caractérisée en ce que** l'arbre d'entraînement (TW1) de l'unité primaire (P) est raccordé du côté de l'entrée directement ou par l'intermédiaire d'un étage (ST1) de transmission à roue frontale à un arbre entraîné (KW) du moteur d'entraînement (AM).

3. Transmission à répartition de puissance selon les revendications 1 ou 2, **caractérisée en ce que** l'unité secondaire (S) et la transmission additive (SG) sont disposées coaxialement par rapport à l'unité primaire (P), l'unité secondaire (S) étant disposée entre l'unité primaire (P) et la transmission additive (SG).

4. Transmission à répartition de puissance selon la revendication 3, **caractérisée en ce que** l'arbre d'entraînement (TW2) de l'unité secondaire (S) est configuré comme arbre creux (HW) dans lequel s'étend l'arbre d'entraînement (TW1) de l'unité primaire (P).

5. Transmission à répartition de puissance selon l'une des revendications 1 à 4, **caractérisée en ce que** l'arbre d'entraînement (TW2) de l'unité secondaire (S) est relié à entraînement directement à la roue creux (HR) ou aux porte-planétaires (PT) de la transmission additive (SG).

6. Transmission à répartition de puissance selon l'une des revendications 1 ou 2, **caractérisée en ce que** la transmission additive (SG) est disposée coaxialement par rapport à l'unité primaire (P) et **en ce que** l'unité secondaire (S) est disposée à axe parallèle par rapport à l'unité primaire (P).

7. Transmission à répartition de puissance selon la revendication 6, **caractérisée en ce que** l'arbre d'entraînement (TW2) de l'unité secondaire (S) est relié à entraînement par l'intermédiaire d'un étage (ST4) de transmission à roue frontale à la roue creuse (HR) ou aux porte-planétaires (PT) de la transmission additive (SG).

8. Transmission à répartition de puissance selon l'une des revendications 1 à 7, **caractérisée en ce que** l'entraînement de roue est configuré comme essieu moteur (AT) d'un véhicule à plusieurs voies, l'élément entraîné de la transmission additive (SG) étant raccordé à entraînement à une transmission différentielle (DG) de l'essieu moteur (AT).

9. Transmission à répartition de puissance selon l'une des revendications 1 à 7, **caractérisée en ce que** l'entraînement de roue est configuré comme entraînement de roue séparé d'une roue motrice à une voie, l'élément entraîné de la transmission additive (SG) étant raccordé à entraînement à une roue conique (EK) d'une transmission (KG) à roue conique entraînant la roue unique ou à un pignon d'une transmission à chaîne entraînant la roue unique.

10. Transmission à répartition de puissance selon l'une des revendications 1 à 9, **caractérisée en ce que** le moteur hydraulique (HM) est configuré comme moteur constant (KM) à débit volumique constant.

11. Transmission à répartition de puissance selon l'une des revendications 1 à 9, **caractérisée en ce que** le moteur hydraulique (HM) est configuré comme moteur ajustable (VM) à cylindrée variable.

12. Transmission à répartition de puissance selon l'une des revendications 1 à 11, **caractérisée en ce que** la pompe (VP) à cylindrée variable et le moteur hydraulique (HM) sont réalisés sous la forme d'une transmission compacte coaxiale dite dos à dos.

13. Procédé de conduite d'une transmission (LG) à répartition de puissance d'un entraînement de roulage (F) d'un véhicule selon l'une des revendications précédentes, dans lequel l'unité primaire de la transmission hydrostatique progressive (HG), configurée comme pompe (VP) à cylindrée variable apte à être ajustée dans les deux sens, entraîne la roue solaire (SR) de la transmission additive (SG) configurée comme transmission à planétaire et l'unité secondaire de la transmission progressive (HG),configurée comme moteur hydraulique (HM), entraîne la roue creuse (HR) de la transmission additive (SG), le porte-planétaire (PT) formant l'élément entraîné de la transmission additive (SG),
**caractérisé en ce que**
pour arrêter le véhicule pendant que le moteur d'entraînement (AM) tourne, la pompe (VP) à cylindrée variable est placée dans la première direction d'ajustement dans laquelle le moteur hydraulique (HM) est entraîné dans le sens arrière,
**en ce que** la roue creuse (HR) entraînée par le moteur hydraulique (HM) présente un sens de rotation opposé à celui de la roue solaire (SR) et
**en ce que** la vitesse périphérique (uS) de la roue solaire (SR) et la vitesse périphérique (uH) de la roue creuse (HR) entraînée par le moteur hydraulique (HM) ont la même valeur absolue.

14. Procédé selon la revendication 13, **caractérisé en ce que** pour obtenir un déplacement vers l'arrière du véhicule, l'ajustement de la pompe (VP) à cylindrée variable est augmenté dans la première direction d'ajustement depuis le réglage prévu pour l'arrêt du véhicule de telle sorte que la vitesse périphérique (uH) de la roue creuse (HR) soit supérieure à la vitesse périphérique (uS) de la roue solaire (SR).

15. Procédé selon les revendications 13 ou 14, **caractérisé en ce que** pour obtenir un déplacement vers l'avant du véhicule, la pompe (VP) à cylindrée variable est ajustée, partant du réglage de l'arrêt du véhicule, en direction d'une position neutre de telle sorte que la vitesse périphérique (uH) de la roue creuse (HR) soit diminuée, la pompe (VP) à cylindrée variable étant ensuite ajustée dans une deuxième direction d'ajustement dans laquelle le moteur hydraulique (HM) est entraîné dans un sens de rotation avant dans lequel la roue creuse (HR) entraînée par le moteur hydraulique (HM) présente un sens de rotation et une vitesse périphérique (uH) identiques à ceux de la roue solaire (SR) .
